# EUROPEAN PATENT APPLICATION

(11) **EP 4 622 343 A1**
(43) Date of publication of application: **24.09.2025**
(21) Application number: 23909875.9
(22) Date of filing: 28.11.2023
(51) Int. Cl.: H04W 36/00

(54) **COMMUNICATION METHOD AND APPARATUS**

(30) Priority: 28.12.2022 CN 202211695101
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN); LOU, Chong, Shenzhen, Guangdong 518129 (CN); YOU, Chunhua, Shenzhen, Guangdong 518129 (CN)
(74) Representative: Gill Jennings & Every LLP
(86) International application number: PCT/CN2023/134650
(87) International publication number: WO 2024/139944

(57) **Abstract**

Embodiments of this application disclose a communication method and apparatus. The method includes: determining whether a behavior performed during current handover is a first behavior, where the first behavior includes radio link control RLC maintenance and medium access control MAC resetting or partial resetting; and sending an RLC status report to a second device when it is determined that the behavior performed during the current handover is the first behavior, where the RLC status report indicates a receiving status of a data packet. According to embodiments of this application, timeliness of transmission of the RLC status report can be improved, service transmission continuity during handover can be ensured, and data transmission efficiency can be improved.

## Description

This application claims priority to Chinese Patent Application No. 202211695101.6, filed with the China National Intellectual Property Administration on December 28, 2022, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, because a location of a terminal device changes, a communication link between the terminal device and an access network device changes. The access network device indicates, based on a movement status of the terminal device, the terminal device to perform cell handover. However, during handover, a problem that a radio link control (radio link control, RLC) status report is not triggered in time may occur. This affects service transmission efficiency, and cannot ensure service transmission continuity during handover.

### SUMMARY

Embodiments of this application provide a communication method and apparatus, to improve timeliness of transmission of an RLC status report, ensure service transmission continuity during handover, and improve data transmission efficiency.

According to a first aspect, an embodiment of this application provides a communication method, including:
determining whether a behavior performed during current handover is a first behavior, where the first behavior includes radio link control RLC maintenance and medium access control MAC resetting or partial resetting; and sending an RLC status report to a second device when it is determined that the behavior performed during the current handover is the first behavior, where the RLC status report indicates a receiving status of a data packet. Sending of the RLC status report is triggered immediately when it is determined that the behavior performed during the current handover is RLC maintenance and MAC resetting or partial resetting. Therefore, timeliness of transmission of the RLC status report is improved, service transmission continuity during handover is ensured, and data transmission efficiency is improved.

In a possible design, the RLC status report is sent to the second device when it is determined to perform the first behavior on at least one radio bearer RB. In other words, sending of the RLC status report is directly triggered provided that the first behavior is performed on any RB. Therefore, timeliness of transmission of the RLC status report is improved, service transmission continuity during handover is ensured, and data transmission efficiency is improved.

In another possible design, it is determined to perform the first behavior on the at least one RB; it is determined whether discontinuous data packets are present in received data packets sent by using a first RB in the at least one RB; and the RLC status report is sent to the second device when the discontinuous data packets are present in the received data packets sent by using the first RB. In other words, sending of the RLC status report is triggered only when discontinuous data packets are present in received data packets sent by using an RB, to reduce a quantity of RLC status reports and reduce signaling overheads.

In another possible design, a first sequence number of a data packet with a largest sequence number and a second sequence number of a last received data packet in all the received data packets sent by using the first RB are obtained; and it is determined, when the first sequence number is greater than the second sequence number, that the discontinuous data packets are present in the received data packets sent by using the first RB. The first sequence number and the second sequence number are obtained to determine whether the discontinuous data packets are present in the data packets sent by using the RB, to ensure accuracy of determining that the discontinuous data packets are present in the data packets sent by using the RB.

In another possible design, first indication information sent by the second device is received. The first indication information includes that a poll bit in an RLC protocol data unit PDU sent by using the at least one RB is 1, the first indication information indicates to send the RLC status report, and the first indication information is sent by the second device when it is determined to perform the first behavior on the at least one RB. When it is determined that the behavior performed during the current handover is the first behavior, it is determined, with reference to the first indication information, to trigger sending of the RLC status report. Therefore, timeliness of transmission of the RLC status report is improved, service transmission continuity during handover is ensured, and data transmission efficiency is improved.

In another possible design, all of the first indication information is carried in a first message, the first message includes one common bit, the common bit indicates that the poll bit in the RLC PDU sent by using the at least one RB is 1, and the first message is a handover command or a target cell access message. One common bit indicates that the poll bit in the RLC PDU sent by the at least one RB is 1, so that signaling overheads are reduced.

In another possible design, the first message includes at least one bit and at least one RB ID field, one bit corresponds to one RB ID field, and each bit indicates whether to initiate polling of the RLC status report on an RB corresponding to an RB ID field.

In another possible design, the first indication information includes a first part of information and a second part of information. The first part of information includes that a poll bit in an RLC PDU sent by using a part of RBs in the at least one RB is 1, and the second part of information includes that a poll bit in an RLC PDU sent by using an RB other than the part of RBs in the at least one RB is 1. The first part of information is carried in a first message, or the first part of information and the first message are included in a same message, and the second part of information is sent after the handover is completed. The first message is a handover command or a target cell access message.

In another possible design, running of a status report prohibit timer stops when it is determined that the behavior performed during the current handover is the first behavior. The status report prohibit timer indicates to prohibit sending of the RLC status report during running. Running of the status report prohibit timer stops, so that UE can send the RLC status report to an access network device as soon as possible.

In another possible design, the handover is mobility LTM handover triggered by L1 and/or L2.

According to a second aspect, an embodiment of this application provides a communication method, including:
receiving a radio link control RLC status report sent by a first device, where the RLC status report is sent by the first device when it is determined that a behavior performed during current handover is a first behavior, and the first behavior includes RLC maintenance and medium access control MAC resetting or partial resetting; and determining a receiving status of a data packet based on the RLC status report. Sending of the RLC status report is triggered immediately when it is determined that the behavior performed during the current handover is RLC maintenance and MAC resetting or partial resetting. Therefore, timeliness of transmission of the RLC status report is improved, service transmission continuity during handover is ensured, and data transmission efficiency is improved.

In a possible design, first indication information is sent to the first device when it is determined to perform the first behavior on at least one radio bearer RB. The first indication information includes that a poll bit in an RLC protocol data unit PDU sent by using the at least one RB is 1, and the first indication information indicates to send the RLC status report. When it is determined that the behavior performed during the current handover is the first behavior, the first indication information is sent, to indicate to trigger sending of the RLC status report. Therefore, timeliness of transmission of the RLC status report is improved, service transmission continuity during handover is ensured, and data transmission efficiency is improved.

In another possible design, all of the first indication information is carried in a first message, the first message includes one common bit, the common bit indicates that the poll bit in the RLC protocol data unit PDU sent by using the at least one RB is 1, and the first message is a handover command or a target cell access message. One common bit indicates that the poll bit in the RLC PDU sent by the at least one RB is 1, so that signaling overheads are reduced.

In another possible design, the first message includes at least one bit and at least one RB ID field, one bit corresponds to one RB ID field, and each bit indicates whether to initiate polling of the RLC status report on an RB corresponding to an RB ID field.

In another possible design, the first indication information includes a first part of information and a second part of information. The first part of information includes that a poll bit in an RLC PDU sent by using a part of RBs in the at least one RB is 1, and the second part of information includes that a poll bit in an RLC PDU sent by using an RB other than the part of RBs in the at least one RB is 1. The first part of information is carried in a first message, or the first part of information and the first message are included in a same message, and the second part of information is sent after the handover is completed. The first message is a handover command or a target cell access message.

In another possible design, the handover is mobility LTM handover triggered by L1 and/or L2.

According to a third aspect, an embodiment of this application provides a communication method, including:
determining whether a behavior performed during current handover is a first behavior, where the first behavior includes radio link control RLC maintenance and medium access control MAC resetting or partial resetting; and sending first indication information to a second device when it is determined that the behavior performed during the current handover is the first behavior, where the first indication information includes that a poll bit in an RLC protocol data unit PDU sent by using at least one radio bearer RB is 1, and the first indication information indicates to send an RLC status report. When it is determined that the behavior performed during the current handover is RLC maintenance and MAC resetting or partial resetting, the first indication information indicates to trigger sending of the RLC status report. Therefore, timeliness of transmission of the RLC status report is improved, service transmission continuity during handover is ensured, and data transmission efficiency is improved.

In a possible design, the first indication information is sent to the second device when it is determined to perform the first behavior on the at least one RB.

In another possible design, all of the first indication information is carried in a first message, the first message includes one common bit, the common bit indicates that the poll bit in the RLC PDU sent by using the at least one RB is 1, and the first message is a handover command or a target cell access message. One common bit indicates that the poll bit in the RLC PDU sent by the at least one RB is 1, so that signaling overheads are reduced.

In another possible design, the first message includes at least one bit and at least one RB ID field, one bit corresponds to one RB ID field, and each bit indicates whether to initiate polling of the RLC status report on an RB corresponding to an RB ID field.

In another possible design, the first indication information includes a first part of information and a second part of information. The first part of information includes that a poll bit in an RLC PDU sent by using a part of RBs in the at least one RB is 1, and the second part of information includes that a poll bit in an RLC PDU sent by using an RB other than the part of RBs in the at least one RB is 1. The first part of information is carried in a first message, or the first part of information and the first message are included in a same message, and the second part of information is sent after the handover is completed. The first message is a handover command or a target cell access message.

In another possible design, the handover is mobility LTM handover triggered by L1 and/or L2.

According to a fourth aspect, an embodiment of this application provides a communication method, including:
receiving first indication information sent by a first device, where the first indication information is sent by the first device when it is determined that a behavior performed during current handover is a first behavior, the first indication information includes that a poll bit in a radio link control RLC protocol data unit PDU sent by using at least one radio bearer RB is 1, and the first behavior includes RLC maintenance and medium access control MAC resetting or partial resetting; and sending an RLC status report to the first device based on the first indication information. When it is determined that the behavior performed during the current handover is RLC maintenance and MAC resetting or partial resetting, the first indication information indicates to trigger sending of the RLC status report. Therefore, timeliness of transmission of the RLC status report is improved, service transmission continuity during handover is ensured, and data transmission efficiency is improved.

In a possible design, the first indication information is sent by the first device when the first behavior is performed on the at least one RB.

In another possible design, all of the first indication information is carried in a first message, the first message includes one common bit, the common bit indicates that the poll bit in the RLC protocol data unit PDU sent by using the at least one RB is 1, and the first message is a handover command or a target cell access message. One common bit indicates that the poll bit in the RLC PDU sent by the at least one RB is 1, so that signaling overheads are reduced.

In another possible design, the first message includes at least one bit and at least one RB ID field, one bit corresponds to one RB ID field, and each bit indicates whether to initiate polling of the RLC status report on an RB corresponding to an RB ID field.

In another possible design, the first indication information includes a first part of information and a second part of information. The first part of information includes that a poll bit in an RLC PDU sent by using a part of RBs in the at least one RB is 1, and the second part of information includes that a poll bit in an RLC PDU sent by using an RB other than the part of RBs in the at least one RB is 1. The first part of information is carried in a first message, or the first part of information and the first message are included in a same message, and the second part of information is sent after the handover is completed. The first message is a handover command or a target cell access message.

In another possible design, the handover is mobility LTM handover triggered by L1 and/or L2.

According to a fifth aspect, an embodiment of this application provides a communication method, including:
determining discarded data during handover when it is determined that a behavior performed during current handover is a first behavior, where the first behavior includes radio link control RLC maintenance and medium access control MAC resetting or partial resetting; and sending the discarded data to a second device in a target cell after handover to the target cell is performed and before an RLC status report is received. When it is determined that the behavior performed during the current handover is RLC maintenance and MAC resetting or partial resetting, the discarded data during handover is obtained, and new HARQ transmission is scheduled once to send the discarded data, without waiting for receiving the RLC status report to retransmit an unsuccessfully received data packet. Therefore, data transmission continuity is improved, and data transmission efficiency is improved.

According to a sixth aspect, an embodiment of this application provides a communication apparatus, including:
a processing module, configured to determine whether a behavior performed during current handover is a first behavior, where the first behavior includes radio link control RLC maintenance and medium access control MAC resetting or partial resetting; and
a sending module, configured to send an RLC status report to a second device when it is determined that the behavior performed during the current handover is the first behavior, where the RLC status report indicates a receiving status of a data packet.

In a possible design, the sending module is configured to send the RLC status report to the second device when it is determined to perform the first behavior on at least one radio bearer RB.

In another possible design, the processing module is further configured to determine to perform the first behavior on the at least one RB; and determine whether discontinuous data packets are present in received data packets sent by using a first RB in the at least one RB. The sending module is further configured to send the RLC status report to the second device when the discontinuous data packets are present in the received data packets sent by using the first RB.

In another possible design, the processing module is further configured to obtain a first sequence number of a data packet with a largest sequence number and a second sequence number of a last received data packet in all the received data packets sent by using the first RB; and determine, when the first sequence number is greater than the second sequence number, that the discontinuous data packets are present in the received data packets sent by using the first RB.

In another possible design, the apparatus further includes:
a receiving module, configured to receive first indication information sent by the second device, where the first indication information includes that a poll bit in an RLC protocol data unit PDU sent by using the at least one RB is 1, the first indication information indicates to send the RLC status report, and the first indication information is sent by the second device when it is determined to perform the first behavior on the at least one RB.

In another possible design, all of the first indication information is carried in a first message, the first message includes one common bit, the common bit indicates that the poll bit in the RLC PDU sent by using the at least one RB is 1, and the first message is a handover command or a target cell access message.

In another possible design, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

In another possible design, the processing module is further configured to stop running a status report prohibit timer when it is determined that the first behavior is performed during the current handover, where the status report prohibit timer indicates to prohibit sending of the RLC status report during running.

In another possible design, the handover is mobility LTM handover triggered by L1 and/or L2.

For operations performed by the communication apparatus and beneficial effects thereof, refer to the method in the first aspect and beneficial effects thereof. Repeated parts are not described again.

According to a seventh aspect, an embodiment of this application provides a communication apparatus, including:
a receiving module, configured to receive a radio link control RLC status report sent by a first device, where the RLC status report is sent by the first device when it is determined that a behavior performed during current handover is a first behavior, and the first behavior includes RLC maintenance and medium access control MAC resetting or partial resetting; and
a processing module, configured to determine a receiving status of a data packet based on the RLC status report.

In a possible design, the sending module is configured to send first indication information to the first device when it is determined to perform the first behavior on at least one radio bearer RB, where the first indication information includes that a poll bit in an RLC protocol data unit PDU sent by using the at least one RB is 1, and the first indication information indicates to send the RLC status report.

In another possible design, all of the first indication information is carried in a first message, the first message includes one common bit, the common bit indicates that the poll bit in the RLC protocol data unit PDU sent by using the at least one RB is 1, and the first message is a handover command or a target cell access message.

In another possible design, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

In another possible design, the handover is mobility LTM handover triggered by L1 and/or L2.

For operations performed by the communication apparatus and beneficial effects thereof, refer to the method in the second aspect and beneficial effects thereof. Repeated parts are not described again.

According to an eighth aspect, an embodiment of this application provides a communication apparatus, including:
a processing module, configured to determine whether a behavior performed during current handover is a first behavior, where the first behavior includes radio link control RLC maintenance and medium access control MAC resetting or partial resetting; and
a sending module, configured to send first indication information to a second device when it is determined that the behavior performed during the current handover is the first behavior, where the first indication information includes that a poll bit in an RLC protocol data unit PDU sent by using at least one radio bearer RB is 1, and the first indication information indicates to send an RLC status report.

In another possible design, the sending module is further configured to send the first indication information to the second device when it is determined to perform the first behavior on the at least one RB.

In another possible design, all of the first indication information is carried in a first message, the first message includes one common bit, the common bit indicates that the poll bit in the RLC PDU sent by using the at least one RB is 1, and the first message is a handover command or a target cell access message.

In another possible design, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

In another possible design, the handover is mobility LTM handover triggered by L1 and/or L2.

For operations performed by the communication apparatus and beneficial effects thereof, refer to the method in the third aspect and beneficial effects thereof. Repeated parts are not described again.

According to a ninth aspect, an embodiment of this application provides a communication apparatus, including:
a receiving module, configured to receive first indication information sent by a first device, where the first indication information is sent by the first device when it is determined that a behavior performed during current handover is a first behavior, the first indication information includes that a poll bit in a radio link control RLC protocol data unit PDU sent by using at least one radio bearer RB is 1, and the first behavior includes RLC maintenance and medium access control MAC resetting or partial resetting; and
a sending module, configured to send an RLC status report to the first device based on the first indication information.

In another possible design, the first indication information is sent by the first device when the first behavior is performed on the at least one RB.

In another possible design, all of the first indication information is carried in a first message, the first message includes one common bit, the common bit indicates that the poll bit in the RLC protocol data unit PDU sent by using the at least one RB is 1, and the first message is a handover command or a target cell access message.

In another possible design, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

In another possible design, the handover is mobility LTM handover triggered by L1 and/or L2.

For operations performed by the communication apparatus and beneficial effects thereof, refer to the method in the fourth aspect and beneficial effects thereof. Repeated parts are not described again.

According to a tenth aspect, an embodiment of this application provides a communication apparatus, including:
a processing module, configured to determine discarded data during handover when it is determined that a behavior performed during current handover is a first behavior, where the first behavior includes radio link control RLC maintenance and medium access control MAC resetting or partial resetting; and
a sending module, configured to send the discarded data to a second device in a target cell after handover to the target cell is performed and before an RLC status report is received.

For operations performed by the communication apparatus and beneficial effects thereof, refer to the method in the fifth aspect and beneficial effects thereof. Repeated parts are not described again.

According to an eleventh aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the method in the first aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the method in the first aspect to the fifth aspect and beneficial effects thereof. Repeated parts are not described again.

According to a twelfth aspect, this application provides a communication apparatus. The apparatus may be an access network device, an apparatus in the access network device, or an apparatus that can be used in combination with the access network device. The communication apparatus may alternatively be a chip system. The communication apparatus may perform the method in the second aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the method in the first aspect to the fifth aspect and beneficial effects thereof. Repeated parts are not described again.

According to a thirteenth aspect, this application provides a communication apparatus. The communication apparatus includes a processor and a memory. The memory is configured to store computer-executable instructions. The processor is configured to execute the computer-executable instructions stored in the memory, to enable the communication apparatus to perform the method according to any one of the first aspect to the fifth aspect.

According to a fourteenth aspect, this application provides a computer-readable storage medium. The computer-readable storage medium is configured to store a computer program, and when the computer program is executed, the method according to any one of the first aspect to the fifth aspect is implemented.

According to a fifteenth aspect, this application provides a computer program product including a computer program. When the computer program is executed, the method according to any one of the first aspect to the fifth aspect is implemented.

According to a sixteenth aspect, an embodiment of this application provides a communication system. The communication system includes at least one terminal device and at least one access network device. The terminal device is configured to perform the steps in the first aspect to the fifth aspect. The access network device is configured to perform the steps in the first aspect to the fifth aspect.

### BRIEF DESCRIPTION OF DRAWINGS

To describe the technical solutions in embodiments of this application or in the background more clearly, the following describes accompanying drawings for describing embodiments of this application or the background.
FIG. 1 is a diagram of an architecture of a communication system according to an embodiment of this application;
FIG. 2 is a diagram of a CU-DU split architecture;
FIG. 3 is a diagram of LTM handover;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a structure of a communication apparatus according to an embodiment of this application;
FIG. 8 is a diagram of a structure of a terminal device according to an embodiment of this application; and
FIG. 9 is a diagram of a structure of an access network device according to an embodiment of this application.

### DESCRIPTION OF EMBODIMENTS

The following describes embodiments of this application with reference to accompanying drawings in embodiments of this application.

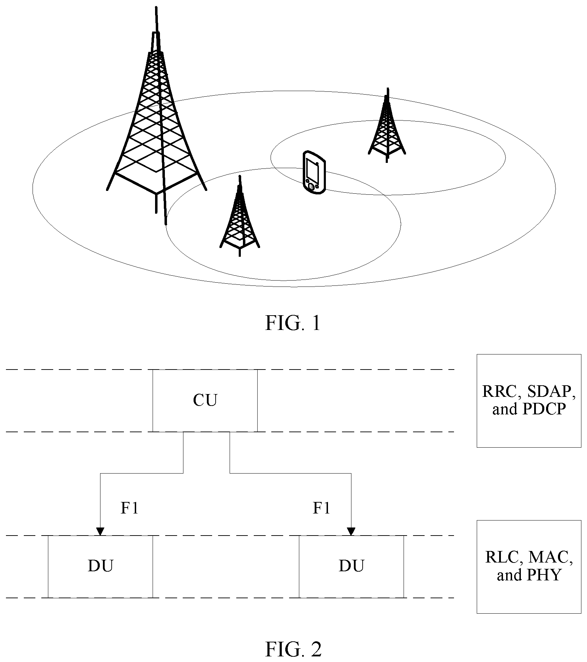

FIG. 1 is a diagram of an architecture of a communication system according to an embodiment of this application. The communication system includes an access network device and a terminal device. The access network device may include a primary base station and a secondary base station, and coverage of a serving cell (carrier) of one or more secondary base stations is within coverage of the primary base station. The terminal device may be located in coverage of one or more serving cells provided by the access network device. When there are a plurality of cells that provide services for the terminal device, the terminal device may work in a carrier aggregation (carrier aggregation, CA), dual connectivity (dual Connectivity, DC), or coordinated multi-point transmission manner. The one or more serving cells provide at least one parameter set (numerology), and simultaneously provide a radio resource for the terminal device.

The terminal device may be referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), and the like. The following uses an example in which the terminal device is UE for description.

The access network device is a radio access network (radio access network, RAN) node (or device) that connects a terminal device to a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), and the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

The communication system may be applied to a long term evolution (long term evolution, LTE) system, a universal mobile telecommunications system (universal mobile telecommunications system, UMTS), a code division multiple access (code division multiple access, CDMA) system, a wireless local area network (wireless local area network, WLAN), a fifth generation mobile communication system (fifth generation, 5G), a next generation wireless communication system, or the like.

FIG. 2 is a diagram of a CU-DU split architecture. One 5G base station is logically divided into one CU and one or more DUs. Each DU is connected to the CU through an F1 logical interface. Operations related to a radio link control (radio link control, RLC) layer, a medium access control (medium access control, MAC) layer, and a physical (physical, PHY) layer are processed by the DU. Operations related to a service data adaptation protocol (service data adaptation protocol, SDAP) layer, a radio resource control (radio resource control, RRC) layer, and a packet data convergence protocol (packet data convergence protocol, PDCP) layer are processed by the CU.

L1/L2 triggered mobility (L1/L2 triggered mobility, LTM) handover is mainly handover involving L1 and/or L2, and handover-related operations are mainly performed at L1 and L2. L1 is the physical layer, L2 is one or more of the MAC layer, the RLC layer, the PDCP layer, and the SDAP layer, and L1/L2 may alternatively be understood as L1 and/or L2. For example, a terminal device sends an L1 measurement result to an access network device by using physical layer control signaling. The physical layer control signaling is carried on a physical uplink control channel (physical uplink control channel, PUCCH). The access network device reads the L1 measurement result, performs a handover decision based on the L1 measurement result, and sends the handover decision to the terminal device by using L1/L2 signaling. The L1/L2 signaling may be carried on a physical downlink control channel (physical downlink control channel, PDCCH), or may be a medium access control control element (media access control control element, MAC CE).

The LTM handover means that the handover-related operations are mainly performed at the physical layer and the MAC layer. However, it should be understood that the LTM handover also involves participation and processing at another protocol layer, for example, the RRC layer (which may also be referred to as L3). A specific name of a handover technology is not limited in this application document. The L1/L2 handover may also be referred to as bottom-layer handover, lower-layer handover, or the like.

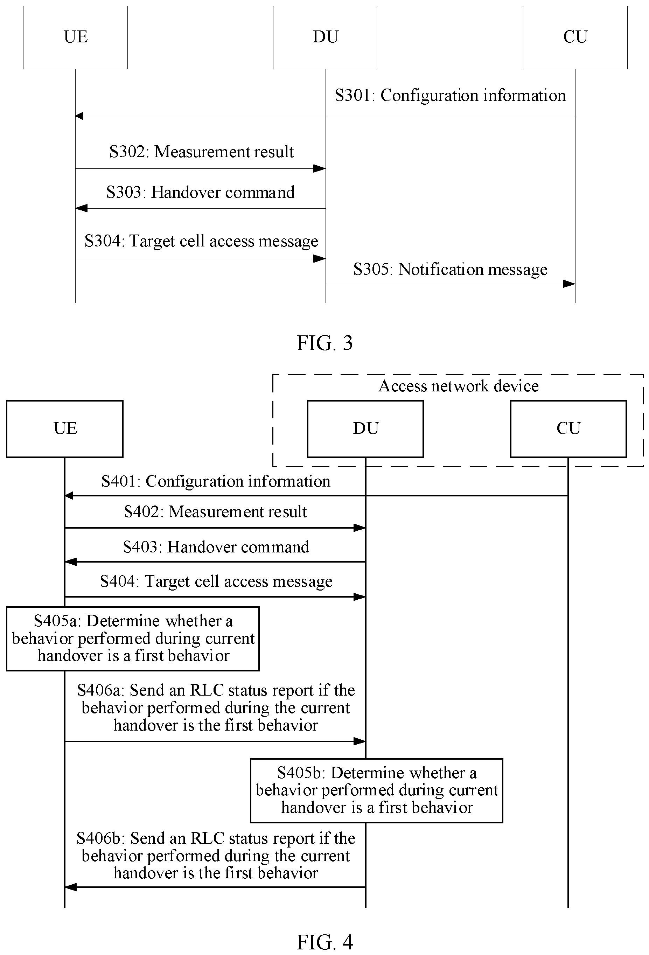

FIG. 3 is a diagram of LTM handover. In a cell handover scenario in a same DU in a CU-DU split architecture, UE is handed over from a source cell (cell 1) to a target cell (cell 2) through LTM handover. This process mainly includes the following steps.

S301: A CU sends configuration information of an LTM candidate cell to the UE. It should be understood that the CU sends the configuration information to the UE via the DU.

S302: The UE sends a measurement result to an access network device (the DU in the figure) to which the source cell belongs.

Specifically, the UE measures a reference signal of the source cell and/or a reference signal of the candidate cell based on the configuration information, to obtain the measurement result, and then reports the measurement result to the DU.

The measurement result includes at least one of the following: an L1 measurement result of the source cell and an L1 measurement result of at least one candidate cell. The L1 measurement result of the source cell and/or the L1 measurement result of the candidate cell may be a cell-level measurement result, for example, cell-level reference signal received power (reference signal received power, RSRP), or may be a beam-level measurement result, for example, beam-level RSRP.

S303: The DU sends a handover command to the UE.

Specifically, after receiving the measurement result, the DU determines, based on the measurement result, whether to perform handover. The DU sends the handover command to the UE if determining to perform handover.

For example, when signal quality of a specific candidate cell is better than that of the source cell, it is determined that handover to the candidate cell is performed. In this case, the candidate cell may also be referred to as a target cell. The DU sends the handover command to the UE. The handover command is an LTM handover command, and the LTM handover command is L1/L2 signaling.

The handover command may include identity information of the target cell or identification information associated with the target cell. Further, the handover command may carry indication information, where the indication information indicates beam direction information that needs to be used when the UE communicates with the target cell.

S304: The UE sends a target cell access message to the DU.

Specifically, the UE performs handover based on the configuration information of the target cell received in S301, accesses the target cell, and starts to perform uplink and downlink data transmission with the target cell after the access succeeds.

In this application document, communication between the UE and the target cell may be understood as communication between the UE and an access network device to which the target cell belongs.

Further, the UE may access the target cell in a random access channel (random access channel, RACH) manner, or access the target cell in a random access-less (RACH-less) manner.

S305: The DU sends notification information to the CU, where the notification information indicates that the UE successfully completes the LTM handover.

The notification information may include identification information associated with an identity of the target cell.

During L3 handover, a radio link control RLC layer performs reestablishment, and a medium access control MAC layer performs resetting. Data being processed at the RLC layer and the MAC layer is cleared, and the data is restored by a packet data convergence protocol PDCP layer. During LTM handover, to maintain service continuity during handover, an L2 processing behavior may be maintained continuously. For example, the RLC layer may continue to perform maintenance instead of resetting or reestablishment. However, the MAC layer may still perform resetting or partial resetting. For example, in the cell handover scenario in the same DU, RLC layer behaviors of the access network device and the UE continue to be performed or maintained. The MAC layer performs resetting or partial resetting, and content of a part of data packets being processed at the MAC layer is cleared. For example, an operation such as discarding a MAC PDU or clearing/flushing a hybrid automatic repeat request (hybrid automatic repeat request, HARQ) buffer is performed.

A reason why the RLC layer can perform maintenance is that the RLC layer processes data at a data radio bearer (data radio bearer, DRB) level, without directly depending on a cell. A reason why the MAC layer cannot completely perform maintenance and needs to perform resetting or partial resetting is that a part of MAC layer processing behaviors are performed at a granularity of a cell. Because the source cell and the target cell usually have different cell-level configurations, the MAC layer needs to perform resetting or partial resetting.

The following describes an RLC automatic repeat request (Automatic Repeat Request, ARQ).

The RLC layer may use an acknowledged mode (Acknowledged Mode, AM). In the AM, a data receiver sends an RLC status report to a data sender, where the RLC status report indicates a receiving status of a data packet. The data sender retransmits an unsuccessfully received data packet, to ensure data transmission reliability.

The RLC status report may be triggered by the data sender, or may be triggered by the data receiver. The following separately describes two triggering manners.
(1) Triggering performed by the data sender: The data sender sets a poll (Poll) bit in an RLC protocol data unit (Protocol Data Unit, PDU) to 1, to indicate the data receiver to send the RLC status report. For example, the data sender may set the poll bit in the RLC PDU to 1 in the following cases, to trigger the data receiver to send the RLC status report.
   a: The data sender actively initiates polling when a sending buffer of the data sender is empty.
   b: The data sender actively initiates polling when a sending window of the data sender is stalled (paused). The stalling of the sending window indicates that the data sender cannot send a subsequent data packet temporarily.

For example, the data sender maintains a sending window (where for example, 0 is a lower boundary of the window, and 100 is an upper boundary of the window), and only data packets whose sequence numbers are 0 to 100 can be sent. When the data receiver feeds back that a data packet #0, a data packet #1, and a data packet #2 are all correctly received, the lower boundary of the sending window is pushed to 3, and the upper boundary is pushed to 103. However, subsequently, because the data receiver has not fed back an RLC ACK of a data packet #3, the lower boundary of the window cannot be updated, and the data sender cannot send a data packet whose sequence number is greater than 103, resulting in transmission stalling.

(2) Triggering performed by the data receiver: The RLC status report is sent after a reassembly timer (t-Reassembly) of the data receiver expires. When discontinuous data is present in received data packets (a sequence number gap is present), the data receiver starts t-Reassembly. If the discontinuous data packets are successfully received during running of t-Reassembly, the data receiver stops t-Reassembly. If running of t-Reassembly expires, the data receiver triggers the RLC status report once, where the RLC status report indicates the data sender to perform data retransmission. After an RLC entity of the data receiver sends the RLC status report once, a status report prohibit timer (t-StatusProhibit) starts. During running of t-StatusProhibit, the RLC entity of the data receiver no longer generates or sends the RLC status report. After t-StatusProhibit expires, the RLC entity of the data receiver can send the RLC status report again. t-StatusProhibit is used, so that the data receiver can be effectively prevented from frequently sending the RLC status report, thereby reducing unnecessary transmission overheads.

However, during LTM handover, when RLC layer maintenance and MAC layer resetting or partial resetting are performed, the RLC status report is not triggered in time, affecting service transmission experience during handover. The following provides detail descriptions by using two examples.

Example 1: When the data sender triggers, in a polling manner, the data receiver to send the RLC status report, because the data sender performs MAC resetting or partial resetting, the RLC PDU (where the poll bit is set to 1) for packet assembly may be discarded at the MAC layer. As a result, the data receiver cannot receive the polling in time, and cannot send the RLC status report. In addition, in this case, the sending window of the data sender may be stalled. Because the data sender cannot receive the RLC status report in time, the data sender cannot continue to send other data, and transmission efficiency is reduced.

Example 2: The data sender performs MAC resetting or partial resetting, resulting in a loss of a part of data packets. When detecting data reception gaps, the data receiver starts t-Reassembly, and attempts to wait for hybrid automatic repeat request HARQ retransmission of an air interface to supplement these gaps. Actually, these data packets have been discarded by the data sender, and HARQ retransmission is not performed. The data receiver sends the RLC status report after the t-Reassembly expires, to indicate the data sender to perform RLC retransmission on the unsuccessfully received data packet. The entire process delays time for the data receiver to receive data, reduces data timeliness, and may cause data invalidation.

To resolve the foregoing technical problems, embodiments of this application provide the following solutions.

FIG. 4 is a schematic flowchart of a communication method according to an embodiment of this application. This embodiment of this application mainly includes the following steps.

S401: A CU sends configuration information of an LTM candidate cell to UE.

S402: The UE reports a measurement result to an access network device (a DU in the figure) to which a source cell belongs.

S403: The DU sends a handover command to the UE.

S404: The UE sends a target cell access message to the DU.

Specific implementations of S401 to S404 are the same as specific implementations of S301 to S304 in FIG. 3. For S401 to S404, refer to S301 to S304. Details are not described herein again.

For downlink transmission, a first device is UE, and a second device is an access network device. The UE triggers sending of an RLC status report, and S405a and S406a are performed. For uplink transmission, a first device is an access network device, and a second device is UE. The access network device triggers sending of an RLC status report, and S405b and S406b are performed.

S405a: The UE determines whether a behavior performed during current handover is a first behavior, where the first behavior includes radio link control RLC maintenance and medium access control MAC resetting or partial resetting.

In an implementation, the configuration information in S401 may include second indication information, and the second indication information indicates the behavior performed during the current handover. For example, the second indication information indicates that RLC maintenance and MAC resetting should be performed, or RLC maintenance and MAC partial resetting should be performed when handover is performed from the source cell (cell 1) to a target cell (cell 2). After receiving the handover command, the UE determines the target cell, and learns, based on the second indication information in the configuration information, that the behavior performed during the current handover is the first behavior.

In another implementation, the handover command in S403 may include third indication information, and the third indication information indicates the behavior performed during the current handover. For example, the third indication information indicates that RLC maintenance and MAC resetting, or RLC maintenance and MAC partial resetting need to be performed during the current handover.

MAC resetting or MAC partial resetting includes at least one of the following: clearing/flushing (flushing) a buffer (for example, a HARQ buffer) of sent data of a MAC layer, clearing a buffer (for example, a HARQ buffer) of received data of the MAC layer, or clearing a PDU being processed at the MAC layer.

It should be understood that the second indication information and the third indication information may perform indication at a granularity of the UE. In other words, during current handover, the first behavior is performed on all radio bearers (radio bearers, RBs) between the terminal device and the access network device. The second indication information and the third indication information may alternatively perform indication at a granularity of an RB. For example, for an RB 1, it indicates that RLC maintenance and MAC resetting or partial resetting are performed; for an RB 2, it indicates that RLC reestablishment and MAC resetting are performed.

The RB may be a data radio bearer (Data Radio Bearer, DRB) or a signaling radio bearer (Signaling Radio Bearer, SRB). The RB may alternatively be an RLC bearer (RLC bearer), or a corresponding RLC channel (RLC channel) or logical channel (logical channel).

The handover may be LTM handover, bottom-layer handover, lower-layer handover, or another type of cell handover. RLC maintenance may also be referred to as RLC non-reestablishment. MAC resetting or partial resetting may also be referred to as MAC reestablishment or partial reestablishment.

S406a: The UE sends the RLC status report to the access network device when determining that the behavior performed during the current handover is the first behavior, where the RLC status report indicates a receiving status of a data packet.

In a possible implementation, the UE sends the RLC status report to the access network device when it is determined to perform the first behavior on at least one RB. In other words, the UE directly triggers sending of the RLC status report provided that the first behavior is performed on any RB.

For example, if the UE determines to perform the first behavior on the RB 1 and the RB 2, and determines not to perform the first behavior on an RB 3, the RLC status report may be sent in the following two manners.

In a first optional manner, the UE sends an RLC status report to the access network device by using the RB 1, where the RLC status report includes a receiving status of a data packet sent by using the RB 1. In addition, the UE sends another RLC status report to the access network device by using the RB 2, where the RLC status report includes a receiving status of a data packet sent by using the RB 2. Because the first behavior is not performed on the RB 3, the RLC status report does not need to be sent for a data packet carried by the RB 3.

In a second optional manner, the UE sends an RLC status report to the access network device. The RLC status report includes a receiving status of a data packet sent by using the RB 1 and a receiving status of a data packet sent by using the RB 2. Because the first behavior is not performed on the RB 3, the RLC status report does not include a receiving status of a data packet sent by using the RB 3.

In another possible implementation, the UE determines to perform the first behavior on at least one RB; determines whether discontinuous data packets are present in received data packets sent by using a first RB in the at least one RB; and sends the RLC status report to the second device when the discontinuous data packets are present in the received data packets sent by using the first RB. The first RB is any RB or a specific RB in the at least one RB. In other words, sending of the RLC status report is triggered only when discontinuous data packets are present in received data packets sent by using an RB, to reduce a quantity of RLC status reports and reduce signaling overheads.

The discontinuous data packets may be understood as that there is a sequence number gap in the received data packets. For example, the access network device sends five data packets to the UE by using the RB 1, and sequence numbers of the five data packets are sequentially 1, 2, 3, 4, and 5. However, the UE receives only the data packets whose sequence numbers are 1, 2, 4, and 5, and does not receive the data packet whose sequence number is 3, and there is a sequence number gap in the data packets that are received by the UE and that are sent by using the RB.

Further, the UE may obtain a first sequence number of a data packet with a largest sequence number and a second sequence number of a last received data packet in all the received data packets sent by using the first RB; and determine, when the first sequence number is greater than the second sequence number, that the discontinuous data packets are present in the received data packets sent by using the first RB.

For example, if the UE determines to perform the first behavior on the RB 1, the RB 2, and the RB 3, where data packets that are received by the UE and that are sent by using the RB 3 are continuous data packets, and discontinuous data packets are present in received data packets sent by using the RB 1 and the RB 2, the RLC status report may be sent in the following two manners.

In a first optional manner, the UE sends an RLC status report to the access network device by using the RB 1, where the RLC status report includes a receiving status of the data packet sent by using the RB 1. In addition, the UE sends another RLC status report to the access network device by using the RB 2, where the RLC status report includes a receiving status of the data packet sent by using the RB 2. Although the first behavior is also performed on the RB 3, because the received data packets sent by using the RB 3 are continuous data packets, the RLC status report does not need to be sent for the data packet carried by the RB 3.

In a second optional manner, the UE sends an RLC status report to the access network device. The RLC status report includes a receiving status of the data packet sent by using the RB 1 and a receiving status of the data packet sent by using the RB 2. Although the first behavior is also performed on the RB 3, because the received data packets sent by using the RB 3 are continuous data packets, the RLC status report does not include a receiving status of the data packet sent by using the RB 3.

Optionally, the UE stops running a status report prohibit timer when it is determined that the first behavior is performed during the current handover, where the status report prohibit timer indicates to prohibit sending of the RLC status report during running. Running of the status report prohibit timer stops, so that the UE can send the RLC status report to the access network device as soon as possible.

Optionally, the access network device sends first indication information to the UE when the access network device determines to perform the first behavior on at least one radio bearer RB, where the first indication information includes that a poll bit in an RLC PDU sent by using the at least one RB is 1. The UE determines to send the RLC status report after receiving the first indication information. In other words, when the UE determines that the behavior performed during the current handover is the first behavior, the UE determines, with reference to the first indication information, to send the RLC status report. The first indication information may perform indication in the following manners.

In a first optional manner, after the UE is successfully handed over to the target cell, the access network device sends downlink data to the UE by using a resource of the target cell. During handover, the first behavior is performed on a first DRB. After the handover is completed, the access network device sets a poll bit in an RLC PDU sent by using the first DRB to 1. For example, during LTM handover, the UE performs the first behavior on a DRB 1 and a DRB 2. After the LTM handover is completed, the access network device sets a poll bit in a first RLC PDU sent by using the DRB 1 to 1, and sets a poll bit in a first RLC PDU sent by using the DRB 2 to 1.

In a second optional manner, all of the first indication information is carried in a first message, the first message includes one common bit, and the common bit indicates whether to initiate polling of the RLC status report on the at least one RB. The first indication information does not need to be carried in a packet header in an RLC PDU sent by using each DRB. Therefore, signaling overheads are reduced. Alternatively, the first message may include at least one bit and at least one RB ID field, one bit corresponds to one RB ID field, and each bit indicates whether to initiate polling of the RLC status report on an RB corresponding to an RB ID field. The first message is a handover command.

For example, if the handover command is a MAC CE, the MAC CE may include two bits and two RB ID fields. A bit 1 corresponds to an RB ID field of the RB 1, a bit 2 corresponds to an RB ID field of the RB 2, and the bit 1 indicates whether to initiate the polling of the RLC status report on the RB 1. If the bit 1 is set to 1, it indicates to initiate polling of the RLC status report on the RB 1. If the bit 1 is set to 0, it indicates not to initiate polling of the RLC status report on the RB 1. The bit 2 indicates whether to initiate polling of the RLC status report on the RB 2. If the bit 2 is set to 1, it indicates to initiate polling of the RLC status report on the RB 2. If the bit 2 is set to 0, it indicates not to initiate polling of the RLC status report on the RB 2. Alternatively, the MAC CE includes one common bit, and only one bit indicates whether to initiate polling of the RLC status report on the at least one RB. When the bit is set to 1, it indicates to initiate polling of the RLC status report on the at least one RB.

In a third optional manner, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, or the first part of information and the handover command are included in a same message, the second part of information is sent after the handover is completed, and the first message is a handover command.

S405b: The access network device determines whether a behavior performed during current handover is a first behavior, where the first behavior includes radio link control RLC maintenance and medium access control MAC resetting or partial resetting.

During handover, the access network device determines whether to perform handover and a behavior performed during the handover. Therefore, the access network device may learn whether the behavior performed during the current handover is the first behavior.

S406b: The access network device sends the RLC status report to the UE when determining that the behavior performed during the current handover is the first behavior, where the RLC status report indicates a receiving status of a data packet.

A specific implementation of S406b is the same as a specific implementation of S406a. For S406b, refer to S406a. Details are not described herein again.

Optionally, the access network device may send a first message to the UE, where the first message includes the RLC status report and the handover command. In other words, the RLC status report and the handover command are sent to the UE in the same message, to reduce signaling overheads.

It should be understood that the first behavior (RLC maintenance and MAC resetting or partial resetting) is not performed on the RB during current handover, and the foregoing process of triggering sending of the RLC status report does not need to be performed. For example, if the behavior performed during the current handover is RLC reestablishment, there is no need to trigger sending of the RLC status report.

It should be noted that an execution sequence of the foregoing steps is not limited, and the steps may be combined or split. S405a and S406a and S405b and S406b may coexist. In this case, a sequence of S405a and S406a and a sequence of S405b and S406b is not limited. S405a and S406a and S405b and S406b may alternatively exist separately. This is not limited in this solution.

In this embodiment of this application, sending of the RLC status report is triggered immediately when it is determined that the behavior performed during the current handover is RLC maintenance and MAC resetting or partial resetting. Therefore, timeliness of transmission of the RLC status report is improved, service transmission continuity during handover is ensured, and data transmission efficiency is improved.

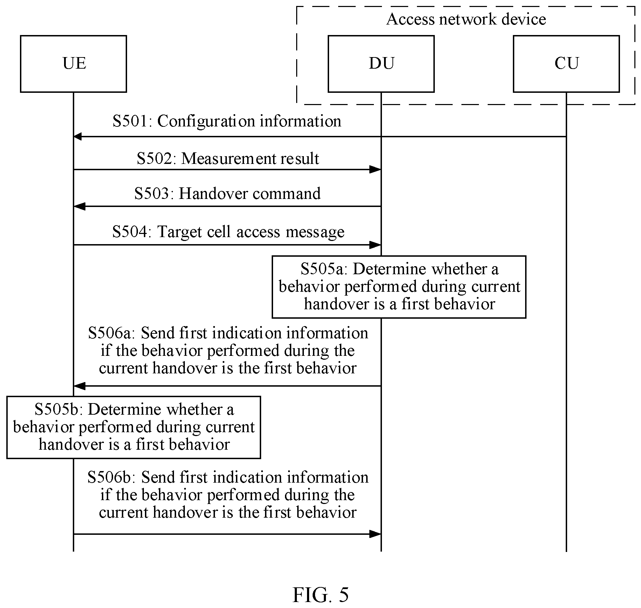

FIG. 5 is a schematic flowchart of a communication method according to an embodiment of this application. This embodiment of this application mainly includes the following steps.

S501: A CU sends configuration information of an LTM candidate cell to UE.

S502: The UE reports a measurement result to an access network device (a DU in the figure) to which a source cell belongs.

S503: The DU sends a handover command to the UE.

S504: The UE sends a target cell access message to the DU.

Specific implementations of S501 to S504 are the same as specific implementations of S301 to S304 in FIG. 3. For S501 to S504, refer to S301 to S304. Details are not described herein again.

For downlink transmission, a first device is an access network device, and a second device is UE. The access network device sends first indication information to indicate the UE to send an RLC status report, and S505a and S506a are performed. For uplink transmission, a first device is UE, and a second device is an access network device. The UE sends first indication information to indicate the access network device to send an RLC status report, and S505b and S506b are performed.

S505a: The access network device determines whether a behavior performed during current handover is a first behavior, where the first behavior includes RLC maintenance and MAC resetting or partial resetting.

During handover, the access network device determines whether to perform handover and a behavior performed during the handover. Therefore, the access network device may learn whether the behavior performed during the current handover is the first behavior.

S506a: The access network device sends the first indication information to the UE when it is determined that the behavior performed during the current handover is the first behavior, where the first indication information includes that a poll bit in an RLC protocol data unit PDU sent by using at least one radio bearer RB is 1, and the first indication information indicates to send the RLC status report.

In a possible implementation, after the UE is successfully handed over to a target cell, the access network device sends downlink data to the UE by using a resource of the target cell. During handover, the first behavior is performed on a first DRB. After the handover is completed, the access network device sets a poll bit in an RLC PDU sent by using the first DRB to 1. For example, during LTM handover, the UE performs the first behavior on a DRB 1 and a DRB 2. After the LTM handover is completed, the access network device sets a poll bit in a first RLC PDU sent by using the DRB 1 to 1, and sets a poll bit in a first RLC PDU sent by using the DRB 2 to 1.

In another possible implementation, all of the first indication information is carried in a first message, the first message includes one common bit, and the common bit indicates whether to initiate polling of the RLC status report on the at least one RB. The first indication information does not need to be carried in a packet header in an RLC PDU sent by using each DRB. Therefore, signaling overheads are reduced. Alternatively, the first message includes at least one bit and at least one RB ID field, one bit corresponds to one RB ID field, and each bit indicates whether to initiate polling of the RLC status report on an RB corresponding to an RB ID field. The first message is a handover command.

For example, if the handover command is a MAC CE, the MAC CE may include two bits and two RB ID fields. A bit 1 corresponds to an RB ID field of an RB 1, a bit 2 corresponds to an RB ID field of an RB 2, and the bit 1 indicates whether to initiate polling of the RLC status report on the RB 1. If the bit 1 is set to 1, it indicates to initiate polling of the RLC status report on the RB 1. If the bit 1 is set to 0, it indicates not to initiate polling of the RLC status report on the RB 1. The bit 2 indicates whether to initiate polling of the RLC status report on the RB 2. If the bit 2 is set to 1, it indicates to initiate polling of the RLC status report on the RB 2. If the bit 2 is set to 0, it indicates not to initiate polling of the RLC status report on the RB 2. Alternatively, the MAC CE includes one common bit, and only one bit indicates whether to initiate polling of the RLC status report on the at least one RB. When the bit is set to 1, it indicates to initiate polling of the RLC status report on the at least one RB.

In another possible implementation, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information may be carried in a first message, or the first part of information and the handover command are included in a same message, the second part of information is sent after the handover is completed, and the first message is a handover command.

S505b: The UE determines whether a behavior performed during current handover is a first behavior, where the first behavior includes RLC maintenance and MAC resetting or partial resetting.

A specific implementation of S505b is the same as a specific implementation of S405a. For S505b, refer to S405a. Details are not described herein again.

S506b: The UE sends the first indication information to the access network device when it is determined that the behavior performed during the current handover is the first behavior, where the first indication information includes that a poll bit in an RLC protocol data unit PDU sent by using at least one radio bearer RB is 1, and the first indication information indicates to send the RLC status report.

All of the first indication information may be carried in the target cell access message. Alternatively, a part of the first indication information may be carried in the target cell access message, and the other part is sent after the handover is completed. For a specific implementation, refer to S506a. Details are not described herein again.

It should be understood that the first behavior (RLC maintenance and MAC resetting or partial resetting) is not performed on the RB during current handover, and the foregoing process of triggering sending of the RLC status report does not need to be performed. For example, if the behavior performed during the current handover is RLC reestablishment, there is no need to trigger sending of the RLC status report.

It should be noted that an execution sequence of the foregoing steps is not limited, and the steps may be combined or split. S505a and S506a and S505b and S506b may coexist. In this case, a sequence of S505a and S506a and a sequence of S505b and S506b is not limited. S505a and S506a and S505b and S506b may alternatively exist separately. This is not limited in this solution.

It should be noted that S405a and S406a in the previous embodiment may be combined with S506b. For the downlink transmission, the UE actively sends the RLC status report (S405a and S406a) based on that the behavior performed during the current handover is the first behavior. For the uplink transmission, the UE may also actively trigger a base station to send the RLC status report once (S506b). Similarly, S405b and S406b in the previous embodiment may also be combined with S506a.

In this embodiment of this application, when it is determined that the behavior performed during the current handover is RLC maintenance and MAC resetting or partial resetting, the first indication information is sent to indicate to trigger sending of the RLC status report. Therefore, timeliness of transmission of the RLC status report is improved, service transmission continuity during handover is ensured, and data transmission efficiency is improved.

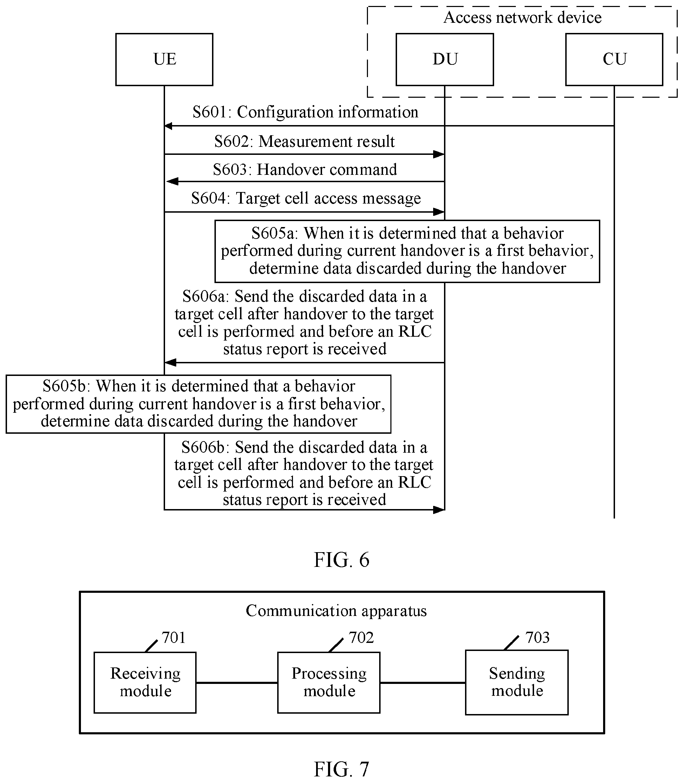

FIG. 6 is a schematic flowchart of a communication method according to an embodiment of this application. This embodiment of this application mainly includes the following steps.

S601: A CU sends configuration information of an LTM candidate cell to UE.

S602: The UE reports a measurement result to an access network device (a DU in the figure) to which a source cell belongs.

S603: The DU sends a handover command to the UE.

S604: The UE sends a target cell access message to the DU.

Specific implementations of S601 to S604 are the same as specific implementations of S301 to S304 in FIG. 3. For S601 to S604, refer to S301 to S304. Details are not described herein again.

For downlink transmission, a first device is an access network device, and a second device is UE. The access network device sends discarded data during handover, and S605a and S606a are performed. For uplink transmission, a first device is UE, and a second device is an access network device. The UE sends discarded data during handover, and S605b and S606b are performed.

S605a: When it is determined that a behavior performed during current handover is a first behavior, the access network device determines the data discarded during the handover, where the first behavior includes radio link control RLC maintenance and medium access control MAC resetting or partial resetting.

During handover, the access network device determines whether to perform handover and a behavior performed during the handover. Therefore, the access network device may learn whether the behavior performed during the current handover is the first behavior.

S606a: The access network device sends the discarded data to the UE in a target cell after handover to the target cell is performed and before an RLC status report is received.

During handover, if the behavior performed during the current handover is the first behavior, a part of data that is being processed in the downlink transmission is discarded at a MAC layer. For example, a downlink HARQ buffer is cleared and/or flushed. The access network device may obtain the data discarded at the MAC layer, and resend the discarded data after handover to the target cell. It should be understood that, in a process of resending the discarded data, it is not because the UE feeds back the RLC status report and requires the access network device to perform retransmission. Therefore, it may be considered that the retransmission is not RLC retransmission, but new HARQ transmission sent by the access network device to the UE in the target cell.

For example, when the access network device is sending an RLC PDU #1 and an RLC PDU #2 in a downlink transmission direction, the MAC layer packets the RLC PDU #1 and the RLC PDU #2 in a same transport block (transport block, TB) for sending. Because the UE fails to successfully decode the TB, the UE feeds back a HARQ NACK to the access network device, and expects the access network device to perform HARQ retransmission on the TB. However, in this case, the access network device triggers one time of LTM handover based on a channel change status of the UE, and both the UE and the access network device perform the first behavior to clear/flush the HARQ buffer. In this case, HARQ retransmission cannot be performed. The access network device knows that the RLC PDU #1 and the RLC PDU #2 are not successfully received by the UE. Therefore, the access network device still sends the RLC PDU #1 and the RLC PDU #2 in the target cell. In this case, new HARQ transmission is scheduled once. In this manner, the access network device does not need to wait for receiving the RLC status report fed back by the UE to retransmit a data packet that is not successfully received by the UE.

S605b: When it is determined that a behavior performed during current handover is a first behavior, the UE determines the data discarded during the handover, where the first behavior includes radio link control RLC maintenance and medium access control MAC resetting or partial resetting.

For how the UE determines that the behavior performed during the current handover is the first behavior, refer to S405a. Details are not described herein again.

S606b: The UE sends the discarded data to the access network device in the target cell after handover to the target cell is performed and before the RLC status report is received.

A specific implementation of S606b is the same as a specific implementation of S606a. For S606b, refer to S606a. Details are not described herein again.

It should be noted that S605a and S606a and S605b and S606b may coexist, or may be used independently.

In embodiments of this application, when it is determined that the behavior performed during the current handover is RLC maintenance and MAC resetting or partial resetting, the discarded data during handover is obtained, and new HARQ transmission is scheduled once to send the discarded data, without waiting for receiving the RLC status report to retransmit the unsuccessfully received data packet. Therefore, data transmission continuity is improved, and data transmission efficiency is improved.

It may be understood that, in the foregoing method embodiments, the methods and operations that are implemented by the terminal device may alternatively be implemented by a component (for example, a chip or a circuit) that may be used in the terminal device, and the methods and the operations that are implemented by the access network device may alternatively be implemented by a component (for example, a chip or a circuit) that may be used in the access network device.

The foregoing mainly describes the solutions provided in embodiments of this application from a perspective of interaction between the devices. It may be understood that, to implement the foregoing functions, each network element, such as a transmit-end device or a receive-end device, includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the terminal device or the access network device may be obtained through division based on the foregoing method examples. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used. Descriptions are provided below by using an example in which each functional module is obtained through division corresponding to each function.

The foregoing describes in detail, with reference to FIG. 4 to FIG. 6, the methods provided in embodiments of this application. The following describes in detail a communication apparatus provided in an embodiment of this application with reference to FIG. 7. It should be understood that descriptions of apparatus embodiments correspond to the descriptions of the method embodiments. Therefore, for content that is not described in detail, refer to the method embodiments. For brevity, details are not described herein again.

FIG. 7 is a diagram of a structure of a communication apparatus according to an embodiment of this application. The communication apparatus may include a receiving module 701, a processing module 702, and a sending module 703. The receiving module 701 and the sending module 703 may communicate with the outside, and the processing module 702 is configured to perform processing, for example, determine whether current handover is a first behavior. The receiving module 701 may also be referred to as a communication interface, a transceiver unit, or a transceiver module. The receiving module 701 and the processing module 702 may be configured to perform actions performed by the UE or the access network device in the foregoing method embodiments.

In a possible design, the communication apparatus may implement the steps or the procedures performed by the UE or the access network device in the foregoing method embodiments. For example, the communication apparatus may be the UE, or a chip or a circuit configured in the UE. Alternatively, the communication apparatus may be the access network device, or a chip or a circuit configured in the access network device. The receiving module 701 is configured to perform receiving and sending-related operations of the UE or the access network device in the foregoing method embodiments. The processing module 702 is configured to perform processing-related operations of the UE or the access network device in the foregoing method embodiments.

In an embodiment,
a processing module 702 is configured to determine whether a behavior performed during current handover is a first behavior, where the first behavior includes radio link control RLC maintenance and medium access control MAC resetting or partial resetting; and
a sending module 703 is configured to send an RLC status report to a second device when it is determined that the behavior performed during the current handover is the first behavior, where the RLC status report indicates a receiving status of a data packet.

Optionally, the sending module 703 is further configured to send the RLC status report to the second device when it is determined to perform the first behavior on at least one radio bearer RB.

Optionally, the processing module 702 is further configured to determine to perform the first behavior on the at least one RB; and determine whether discontinuous data packets are present in received data packets sent by using a first RB in the at least one RB. The sending module is further configured to send the RLC status report to the second device when the discontinuous data packets are present in the received data packets sent by using the first RB.

Optionally, the processing module 702 is further configured to obtain a first sequence number of a data packet with a largest sequence number and a second sequence number of a last received data packet in all the received data packets sent by using the first RB; and determine, when the first sequence number is greater than the second sequence number, that the discontinuous data packets are present in the received data packets sent by using the first RB.

Optionally, the receiving module 701 is configured to receive first indication information sent by the second device, where the first indication information includes that a poll bit in an RLC protocol data unit PDU sent by using the at least one RB is 1, the first indication information indicates to send the RLC status report, and the first indication information is sent by the second device when it is determined to perform the first behavior on the at least one RB.

Optionally, all of the first indication information is carried in a first message, the first message includes one common bit, the common bit indicates that the poll bit in the RLC PDU sent by using the at least one RB is 1, and the first message is a handover command or a target cell access message.

Optionally, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

Optionally, the processing module 702 is further configured to stop running a status report prohibit timer when it is determined that the first behavior is during the current handover, where the status report prohibit timer indicates to prohibit sending of the RLC status report during running.

Optionally, the handover is mobility LTM handover triggered by L1 and/or L2.

In another embodiment,
a receiving module 701 is configured to receive a radio link control RLC status report sent by a first device, where the RLC status report is sent by the first device when it is determined that a behavior performed during current handover is a first behavior, and the first behavior includes RLC maintenance and medium access control MAC resetting or partial resetting; and
a processing module 702 is configured to determine a receiving status of a data packet based on the RLC status report.

Optionally, the sending module 703 is configured to send first indication information to the first device when it is determined to perform the first behavior on at least one radio bearer RB, where the first indication information includes that a poll bit in an RLC protocol data unit PDU sent by using the at least one RB is 1, and the first indication information indicates to send the RLC status report.

Optionally, all of the first indication information is carried in a first message, the first message includes one common bit, the common bit indicates that the poll bit in the RLC protocol data unit PDU sent by using the at least one RB is 1, and the first message is a handover command or a target cell access message.

Optionally, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

Optionally, the handover is mobility LTM handover triggered by L1 and/or L2.

In another embodiment,
a processing module 702 is configured to determine whether a behavior performed during current handover is a first behavior, where the first behavior includes radio link control RLC maintenance and medium access control MAC resetting or partial resetting; and
a sending module 703 is configured to send first indication information to a second device when it is determined that a behavior performed during current handover is a first behavior, where the first indication information includes that a poll bit in an RLC protocol data unit PDU sent by using at least one radio bearer RB is 1, and the first indication information indicates to send an RLC status report.

Optionally, the sending module 703 is further configured to send the first indication information to the second device when it is determined to perform the first behavior on the at least one RB.

Optionally, all of the first indication information is carried in a first message, the first message includes one common bit, the common bit indicates that the poll bit in the RLC PDU sent by using the at least one RB is 1, and the first message is a handover command or a target cell access message.

Optionally, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

Optionally, the handover is mobility LTM handover triggered by L1 and/or L2.

In another embodiment,
a receiving module 701 is configured to receive first indication information sent by a first device, where the first indication information is sent by the first device when it is determined that a behavior performed during current handover is a first behavior, the first indication information includes that a poll bit in a radio link control RLC protocol data unit PDU sent by using at least one radio bearer RB is 1, and the first behavior includes RLC maintenance and medium access control MAC resetting or partial resetting; and
a sending module 703 is configured to send an RLC status report to the first device based on the first indication information.

Optionally, the first indication information is sent by the first device when the first behavior is performed on the at least one RB.

Optionally, all the first indication information is carried in a first message, the first message includes one common bit, the common bit indicates that the poll bit in the RLC protocol data unit PDU sent by using the at least one RB is 1, and the first message is a handover command or a target cell access message.

Optionally, the first indication information includes a first part of information and a second part of information, the first part of information includes that a poll bit in an RLC PDU sent by using a part of RBs in the at least one RB is 1, the second part of information includes that a poll bit in an RLC PDU sent by using an RB other than the part of RBs in the at least one RB is 1, the first part of information is carried in a first message, the second part of information is sent after the handover is completed, and the first message is a handover command or a target cell access message.

Optionally, the handover is mobility LTM handover triggered by L1 and/or L2.

It should be noted that, for implementation of each module, refer to the corresponding descriptions in the method embodiments shown in FIG. 4 to FIG. 6, to perform the methods and the functions performed by the UE or the access network device in the foregoing embodiments.

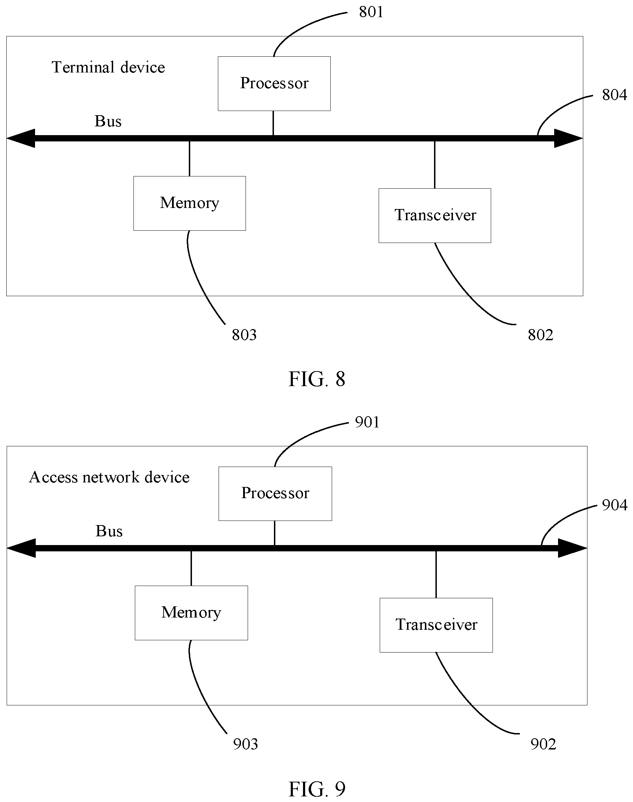

FIG. 8 is a diagram of a structure of a terminal device according to an embodiment of this application. The terminal device may be used in the system shown in FIG. 1 or FIG. 2, to perform functions of the terminal device in the foregoing method embodiments, or implement steps or procedures performed by the terminal device in the foregoing method embodiments.

As shown in FIG. 8, the terminal device includes a processor 801 and a transceiver 802. Optionally, the terminal device further includes a memory 803. The processor 801, the transceiver 802, and the memory 803 communicate with each other through an internal connection path, to transfer a control signal and/or a data signal. The memory 803 is configured to store a computer program. The processor 801 is configured to invoke the computer program from the memory 803 and run the computer program, to control the transceiver 802 to receive/send a signal. Optionally, the terminal device may further include an antenna, configured to send, via a radio signal, uplink data or uplink control signaling output by the transceiver 802.

The processor 801 may correspond to the processing module in FIG. 7. The processor 801 and the memory 803 may be combined into one processing apparatus. The processor 801 is configured to execute program code stored in the memory 803 to implement the foregoing functions. During specific implementation, the memory 803 may alternatively be integrated into the processor 801, or may be independent of the processor 801.

The transceiver 802 may correspond to the receiving module and the sending module in FIG. 7, and may also be referred to as a transceiver unit or a transceiver module. The transceiver 802 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that the terminal device shown in FIG. 8 can implement processes related to the terminal device in the method embodiments in FIG. 4 to FIG. 6. Operations and/or functions of the modules in the terminal device are separately intended to implement the corresponding procedures in the foregoing method embodiments. For details, refer to the descriptions in the foregoing method embodiments. To avoid repetition, detailed descriptions are properly omitted herein.

The processor 801 may be configured to perform actions that are implemented inside the terminal device and that are described in the foregoing method embodiments, and the transceiver 802 may be configured to perform actions that are sent by the terminal device to the access network device or received from the access network device and that are described in the foregoing method embodiments. For details, refer to the descriptions in the foregoing method embodiments. Details are not described herein again.

The processor 801 may be a central processing unit, a general-purpose processor, a digital signal processor, an application-specific integrated circuit, a field programmable gate array or another programmable logical device, a transistor logical device, a hardware component, or any combination thereof. The processor 801 may implement or execute various example logical blocks, modules, and circuits described with reference to content disclosed in this application. Alternatively, the processor 801 may be a combination that implements a computing function, for example, a combination that includes one or more microprocessors, or a combination of a digital signal processor and a microprocessor. A communication bus 804 may be a peripheral component interconnect PCI bus, an extended industry standard architecture EISA bus, or the like. The bus may be classified into an address bus, a data bus, a control bus, and the like. For ease of representation, only one bold line is for representing the bus in FIG. 8, but this does not mean that there is only one bus or only one type of bus. The communication bus 804 is configured to implement communication connection between these components. The transceiver 802 in this embodiment of this application is configured to perform signaling or data communication with another node device. The memory 803 may include a volatile memory, for example, a nonvolatile random access memory (nonvolatile random access memory, NVRAM), a phase change random access memory (phase change RAM, PRAM), or a magnetoresistive random access memory (magnetoresistive RAM, MRAM); or may include a non-volatile memory, for example, at least one magnetic disk storage device, an electrically erasable programmable read-only memory (electrically erasable programmable read-only memory, EEPROM), a flash memory such as a NOR flash memory (NOR flash memory) or a NAND flash memory (NAND flash memory), or a semiconductor device such as a solid state drive (solid state drive, SSD). Optionally, the memory 803 may alternatively be at least one storage apparatus that is away from the processor 801. Optionally, the memory 803 may further store a group of computer program code or configuration information. Optionally, the processor 801 may further execute the program stored in the memory 803. The processor may cooperate with the memory and the transceiver to perform any method and function of the terminal device in the foregoing embodiments of this application.

FIG. 9 is a diagram of a structure of an access network device according to an embodiment of this application. The access network device may be used in the system shown in FIG. 1 or FIG. 2, to perform functions of the access network device in the foregoing method embodiments, or implement steps or procedures performed by the access network device in the foregoing method embodiments.

As shown in FIG. 9, the access network device includes a processor 901 and a transceiver 902. Optionally, the access network device further includes a memory 903. The processor 901, the transceiver 902, and the memory 903 communicate with each other through an internal connection path, to transfer a control signal and/or a data signal. The memory 903 is configured to store a computer program. The processor 901 is configured to invoke the computer program from the memory 903 and run the computer program, to control the transceiver 902 to receive/send a signal. Optionally, the access network device may further include an antenna, configured to send, via a radio signal, uplink data or uplink control signaling output by the transceiver 902.

The processor 901 corresponds to the processing module in FIG. 7. The processor 901 and the memory 903 may be combined into one processing apparatus. The processor 901 is configured to execute program code stored in the memory 903 to implement the foregoing functions. During specific implementation, the memory 903 may alternatively be integrated into the processor 901, or may be independent of the processor 901.

The transceiver 902 may correspond to the sending module and the receiving module in FIG. 7, and may also be referred to as a transceiver unit or a transceiver module. The transceiver 902 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that the access network device shown in FIG. 9 can implement processes related to the access network device in the method embodiments in FIG. 4 to FIG. 6. Operations and/or functions of modules in the access network device are separately intended to implement the corresponding procedures in the foregoing method embodiments. For details, refer to the descriptions in the foregoing method embodiments. To avoid repetition, detailed descriptions are properly omitted herein.

The processor 901 may be configured to perform actions that are implemented inside the access network device and that are described in the foregoing method embodiments, and the transceiver 902 may be configured to perform actions that are sent by the access network device to the terminal device or received from the terminal device and that are described in the foregoing method embodiments. For details, refer to the descriptions in the foregoing method embodiments. Details are not described herein again.

The processor 901 may be processors of various types that are mentioned above. A communication bus 904 may be a peripheral component interconnect PCI bus, an extended industry standard architecture EISA bus, or the like. The bus may be classified into an address bus, a data bus, a control bus, and the like. For ease of representation, only one bold line is for representing the bus in FIG. 9, but this does not mean that there is only one bus or only one type of bus. The communication bus 904 is configured to implement communication connection between these components. The transceiver 902 in the device in this embodiment of this application is configured to perform signaling or data communication with another device. The memory 903 may be memories of various types mentioned above. Optionally, the memory 903 may alternatively be at least one storage apparatus that is away from the processor 901. The memory 903 stores a group of computer program code or configuration information, and the processor 901 executes the program in the memory 903. The processor may cooperate with the memory and the transceiver to perform any method and function of the access network device in the foregoing embodiments of this application.

An embodiment of this application further provides a chip system. The chip system includes a processor, configured to support a terminal device or an access network device in implementing a function in any one of the foregoing embodiments, for example, generating or processing the first message in the foregoing methods. In a possible design, the chip system may further include a memory, and the memory is configured to store program instructions and data that are necessary for the terminal device or the access network device. The chip system may include a chip, or may include a chip and another discrete component. Input and output of the chip system respectively correspond to receiving and sending operations of the terminal device or the access network device in the method embodiments.

An embodiment of this application further provides a processing apparatus, including a processor and a communication interface. The processor may be configured to perform the methods in the foregoing method embodiments.

It should be noted that the processor in this embodiment of this application may be an integrated circuit chip, and has a signal processing capability. In an implementation process, steps in the foregoing method embodiments can be implemented by using a hardware integrated logical circuit in the processor, or by using instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The operations of the methods disclosed with reference to embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

According to the methods provided in embodiments of this application, this application further provides a computer program product. The computer program product includes a computer program, and when the computer program is run on a computer, the computer is enabled to perform the method according to any one of the embodiments shown in FIG. 4 to FIG. 6.

According to the methods provided in embodiments of this application, this application further provides a computer-readable medium. The computer-readable medium stores a computer program, and when the computer program is run on a computer, the computer is enabled to perform the method according to any one of the embodiments shown in FIG. 4 to FIG. 6.

According to the methods provided in embodiments of this application, this application further provides a communication system. The communication system includes the foregoing one or more terminal devices and the foregoing one or more access network devices.

All or some of the foregoing embodiments may be implemented by using software, hardware, firmware, or any combination thereof. When the software is used to implement the embodiments, all or a part of embodiments may be implemented in the form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, SSD)), or the like.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining whether a behavior performed during current handover is a first behavior, wherein the first behavior comprises radio link control RLC maintenance and medium access control MAC resetting or partial resetting; and
sending an RLC status report to a second device when it is determined that the behavior performed during the current handover is the first behavior, wherein the RLC status report indicates a receiving status of a data packet.

2. The method according to claim 1, wherein the method further comprises:
sending the RLC status report to the second device when it is determined to perform the first behavior on at least one radio bearer RB.

3. The method according to claim 1, wherein the method further comprises:
determining to perform the first behavior on at least one RB;
determining whether discontinuous data packets are present in received data packets sent by using a first RB in the at least one RB; and
sending the RLC status report to the second device when the discontinuous data packets are present in the received data packets sent by using the first RB.

4. The method according to claim 3, wherein determining whether the discontinuous data packets are present in the received data packets sent by using the first RB in the at least one RB comprises:
obtaining a first sequence number of a data packet with a largest sequence number and a second sequence number of a last received data packet in all the received data packets sent by using the first RB; and
determining, when the first sequence number is greater than the second sequence number, that the discontinuous data packets are present in the received data packets sent by using the first RB.

5. The method according to any one of claims 1 to 4, wherein the method further comprises:
receiving first indication information sent by the second device, wherein the first indication information comprises that a poll bit in an RLC protocol data unit PDU sent by using the at least one RB is 1, the first indication information indicates to send the RLC status report, and the first indication information is sent by the second device when it is determined to perform the first behavior on the at least one RB.

6. The method according to claim 5, wherein all of the first indication information is carried in a first message, the first message comprises one common bit, the common bit indicates that the poll bit in the RLC PDU sent by using the at least one RB is 1, and the first message is a handover command or a target cell access message.

7. The method according to claim 5, wherein the first indication information comprises a first part of information and a second part of information, the first part of information comprises that a poll bit in an RLC PDU sent by using a part of RBs in the at least one RB is 1, the second part of information comprises that a poll bit in an RLC PDU sent by using an RB other than the part of RBs in the at least one RB is 1, the first part of information is carried in a first message, the second part of information is sent after the handover is completed, and the first message is a handover command or a target cell access message.

8. The method according to any one of claims 1 to 7, wherein the method further comprises:
stopping running a status report prohibit timer when it is determined that the first behavior is performed during the current handover, wherein the status report prohibit timer indicates to prohibit sending of the RLC status report during running.

9. The method according to any one of claims 1 to 8, wherein the handover is mobility LTM handover triggered by L1 and/or L2.

10. A communication method, wherein the method comprises:
receiving a radio link control RLC status report sent by a first device, wherein the RLC status report is sent by the first device when it is determined that a behavior performed during current handover is a first behavior, and the first behavior comprises RLC maintenance and medium access control MAC resetting or partial resetting; and
determining a receiving status of a data packet based on the RLC status report.

11. The method according to claim 10, wherein the method comprises:
sending first indication information to the first device when it is determined to perform the first behavior on at least one radio bearer RB, wherein the first indication information comprises that a poll bit in an RLC protocol data unit PDU sent by using the at least one RB is 1, and the first indication information is used for triggering the second device to send the RLC status report.

12. The method according to claim 11, wherein all of the first indication information is carried in a first message, the first message comprises one common bit, the common bit indicates that the poll bit in the RLC protocol data unit PDU sent by using the at least one RB is 1, and the first message is a handover command or a target cell access message.

13. The method according to claim 11, wherein the first indication information comprises a first part of information and a second part of information, the first part of information comprises that a poll bit in an RLC PDU sent by using a part of RBs in the at least one RB is 1, the second part of information comprises that a poll bit in an RLC PDU sent by using an RB other than the part of RBs in the at least one RB is 1, the first part of information is carried in a first message, the second part of information is sent after the handover is completed, and the first message is a handover command or a target cell access message.

14. The method according to any one of claims 10 to 13, wherein the handover is mobility LTM handover triggered by L1 and/or L2.

15. A communication method, wherein the method comprises:
determining whether a behavior performed during current handover is a first behavior, wherein the first behavior comprises radio link control RLC maintenance and medium access control MAC resetting or partial resetting; and
sending first indication information to a second device when it is determined that the behavior performed during the current handover is the first behavior, wherein the first indication information comprises that a poll bit in an RLC protocol data unit PDU sent by using at least one radio bearer RB is 1, and the first indication information is used for triggering the second device to send an RLC status report.

16. The method according to claim 15, wherein sending the first indication information to the second device when it is determined that the behavior performed during the current handover is the first behavior comprises:
sending the first indication information to the second device when it is determined to perform the first behavior on the at least one RB.

17. The method according to claim 15 or 16, wherein all of the first indication information is carried in a first message, the first message comprises one common bit, the common bit indicates that the poll bit in the RLC PDU sent by using the at least one RB is 1, and the first message is a handover command or a target cell access message.

18. The method according to claim 15 or 16, wherein the first indication information comprises a first part of information and a second part of information, the first part of information comprises that a poll bit in an RLC PDU sent by using a part of RBs in the at least one RB is 1, the second part of information comprises that a poll bit in an RLC PDU sent by using an RB other than the part of RBs in the at least one RB is 1, the first part of information is carried in a first message, the second part of information is sent after the handover is completed, and the first message is a handover command or a target cell access message.

19. The method according to any one of claims 15 to 18, wherein the handover is mobility LTM handover triggered by L1 and/or L2.

20. A communication method, wherein the method comprises:
receiving first indication information sent by a first device, wherein the first indication information is sent by the first device when it is determined that a behavior performed during current handover is a first behavior, the first indication information comprises that a poll bit in a radio link control RLC protocol data unit PDU sent by using at least one radio bearer RB is 1, and the first behavior comprises RLC maintenance and medium access control MAC resetting or partial resetting; and
sending an RLC status report to the first device based on the first indication information.

21. The method according to claim 20, wherein the first indication information is sent by the first device when the first behavior is performed on the at least one RB.

22. The method according to claim 20 or 21, wherein all of the first indication information is carried in a first message, the first message comprises one common bit, the common bit indicates that the poll bit in the RLC protocol data unit PDU sent by using the at least one RB is 1, and the first message is a handover command or a target cell access message.

23. The method according to claim 20 or 21, wherein the first indication information comprises a first part of information and a second part of information, the first part of information comprises that a poll bit in an RLC PDU sent by using a part of RBs in the at least one RB is 1, the second part of information comprises that a poll bit in an RLC PDU sent by using an RB other than the part of RBs in the at least one RB is 1, the first part of information is carried in a first message, the second part of information is sent after the handover is completed, and the first message is a handover command or a target cell access message.

24. The method according to any one of claims 20 to 23, wherein the handover is mobility LTM handover triggered by L1 and/or L2.

25. A communication apparatus, comprising a memory and a processor, wherein the memory is configured to store a computer program, and the processor runs the computer program, so that the communication apparatus performs the method according to any one of claims 1 to 9 or any one of claims 20 to 24.

26. A communication apparatus, comprising a memory and a processor, wherein the memory is configured to store a computer program, and the processor runs the computer program, so that the communication apparatus performs the method according to any one of claims 10 to 14 or any one of claims 15 to 19.

27. A computer-readable storage medium, wherein the computer-readable storage medium stores a computer program, and when the computer program is run on a processor, the method according to any one of claims 1 to 24 is implemented.
